# DEMANDE DE BREVET EUROPEEN

(11) **EP 1 757 353 A1**
(43) Date de publication de la demande: **28.02.2007**
(21) Numéro de dépôt: 05300849.6
(22) Date de dépôt: 24.10.2005
(51) Int. Cl.: B01D 53/94, F01N 3/035, F01N 3/029

(54) **Procédé d'oxydation pour l'épuration de gaz d'échappement d'un moteur à combustion et système d'aide au fonctionnement d'un catalyseur d'oxydation**

(30) Priorité: 10.11.2004 FR 0411991
(71) Demandeur: Renault, 92109 Boulogne Billancourt (FR)
(72) Inventeur: Fresnet, François, 92000, Nanterre (FR); Rouveilrolles, Pierre, 92120, Montrouge (FR)

(57) **Abrégé**

Procédé d'oxydation pour l'épuration de gaz d'échappement d'un moteur à combustion 1, dans lequel on injecte de l'ozone dans un catalyseur d'oxydation 3 lorsque la température des gaz d'échappement dans le catalyseur d'oxydation 3 est inférieure à un seuil prédéterminé, la quantité d'ozone injectée étant supérieure à la quantité de NOₓ présente dans les gaz d'échappement en entrée du catalyseur d'oxydation 3.

## Description

La présente invention concerne un procédé d'oxydation pour l'épuration de gaz d'échappement d'un moteur à combustion, en particulier dans une ligne d'échappement de moteur Diesel, ainsi qu'un système d'aide au fonctionnement d'un catalyseur d'oxydation.

Pour épurer les gaz d'échappement de machines à combustion interne, notamment de moteurs à allumage spontané, on installe des systèmes dits d'épuration de gaz d'échappement dans une ligne d'évacuation des gaz d'échappement. De tels systèmes d'épuration de gaz d'échappement peuvent notamment comprendre des systèmes à catalyseurs d'oxydation.

Le catalyseur d'oxydation permet d'oxyder en CO₂ et H₂O les produits résiduels de combustion de type HC/CO. Le catalyseur est efficace lorsque sa température est élevée. À froid, le catalyseur ne fonctionne pas de façon satisfaisante, d'où un risque de pollution d'autant plus élevé que le trajet moyen d'un véhicule est court.

La demande EP 1026373 décrit ainsi un dispositif de purification de gaz d'échappements comprenant une source d'ozone qui libère de l'ozone dans les gaz avant leur passage dans un filtre à particules.

Le brevet US 6,557,340 décrit un système de traitement des gaz d'échappement Diesel comprenant un filtre à particules, un générateur d'ozone, les particules des gaz d'échappement étant oxydées par l'ozone avant leur passage dans le filtre à particules. L'ozone est produit à partir des gaz d'échappement par un générateur plasma positionné dans la ligne d'échappement.

Toutefois, ces procédés sont énergétiquement chers, ne permettent pas de contrôler de manière satisfaisante la masse des suies dans le filtre à particules, et ne proposent rien pour un catalyseur d'oxydation.

La présente invention propose un procédé d'oxydation remédiant à ces inconvénients.

En particulier, la présente invention propose un procédé d'oxydation qui permet de réduire la quantité d'hydrocarbures imbrûlés et de CO. Le procédé permet d'améliorer notablement la plage de température de fonctionnement du catalyseur d'oxydation. Il autorise en outre un fonctionnement du catalyseur d'oxydation à des températures faibles.

L'invention propose également un système d'aide au fonctionnement d'un catalyseur d'oxydation pour l'épuration de gaz d'échappement d'un moteur à combustion.

Le procédé d'oxydation pour l'épuration de gaz d'échappement d'un moteur à combustion, selon un aspect de l'invention, comprend l'injection d'ozone dans un catalyseur d'oxydation lorsque la température du catalyseur d'oxydation est inférieure à un seuil prédéterminé, la quantité d'ozone injectée étant supérieure à la quantité de NOₓ présente dans les gaz d'échappement en entrée du catalyseur d'oxydation.

Avantageusement, le seuil prédéterminé est compris entre 100 et 200°C, préférablement entre 140 et 160°C, par exemple environ 150°C.

Avantageusement, le rapport entre la quantité minimale d'ozone à injecter et la quantité de NO présente dans les gaz d'échappement est compris entre 1 et 2, préférablement entre 1,3 et 1,7, par exemple environ 1,5 pour assurer une excellente oxydation.

Dans un mode de réalisation de l'invention, l'ozone est injecté à contre-courant des gaz d'échappement pour un bon mélange avec les gaz d'échappement.

Dans un mode de réalisation de l'invention, l'injection d'ozone dans les gaz d'échappement est effectuée en amont du catalyseur d'oxydation.

Dans un mode de réalisation de l'invention, l'injection d'ozone dans les gaz d'échappement est effectuée dans le catalyseur d'oxydation.

Dans un mode de réalisation de l'invention, on injecte de l'ozone dans un piège à NOₓ lorsque la température des gaz d'échappement dans le piège à NOₓ est inférieure à un seuil prédéterminé, la quantité d'ozone injectée étant supérieure à la quantité de NO présente dans les gaz d'échappement en entrée du piège à NOₓ.

L'injection d'ozone peut avoir lieu lorsque la charge du moteur est supérieure à un seuil prédéterminé.

Dans un mode de réalisation de l'invention, le seuil prédéterminé est compris entre 200 et 400°C, préférablement entre 250 et 350°C, par exemple 300°C.

Dans un mode de réalisation de l'invention, on injecte de l'ozone dans un filtre à particules lorsque la température des gaz d'échappement est inférieure ou égale à 250°C, la quantité d'ozone injectée étant supérieure à la quantité de NOₓ présente dans les gaz d'échappement en entrée du filtre à particules.

Dans un mode de réalisation de l'invention, on injecte de l'ozone dans un catalyseur d'oxydation lors du démarrage du véhicule, dans un filtre à particules lors d'une phase de ralenti du moteur, et dans un piège à NOₓ lors d'une phase de forte charge du moteur.

Le système d'aide au fonctionnement d'un catalyseur d'oxydation pour l'épuration de gaz d'échappement d'un moteur à combustion de véhicule automobile, selon un aspect de l'invention, comprend une ligne d'échappement en sortie du moteur sur laquelle est positionné le catalyseur d'oxydation, un générateur d'ozone relié à la ligne d'échappement par un conduit, et alimenté en oxygène par une pompe à air et un dispositif de prise d'air destiné à capter l'air extérieur au véhicule, la pompe à air et le dispositif de prise d'air étant munis chacun d'une vanne, le système comprenant un dispositif de pilotage relié au moteur, au dispositif d'injection d'ozone, à la pompe à air et aux vannes de la pompe à air et du dispositif de prise d'air.

Dans un mode de réalisation de l'invention, le conduit est coudé et orienté à contre-courant des gaz issus du moteur.

Un filtre à particules relié à un conduit d'alimentation en ozone peut être prévu.

Le dispositif peut comprendre un seul générateur d'ozone et des vannes pilotées de répartition de l'ozone produit par le générateur d'ozone entre au moins le catalyseur d'oxydation et le filtre à particules.

Le dispositif peut comprendre un piège à NOₓ relié à un conduit d'alimentation en ozone.

Le dispositif peut comprendre un générateur d'ozone pour alimenter le catalyseur d'oxydation et un générateur d'ozone pour alimenter le filtre à particules.

Le dispositif peut comprendre un générateur d'ozone supplémentaire pour alimenter le piège à NOₓ.

Les NOₓ, (x=1 ou x=2) désignent les gaz NO et NO₂.

L'ozone étant plus réactif avec NO qu'avec NO₂, la quantité d'ozone injectée est de préférence supérieure à la quantité de NO présente dans les gaz d'échappement.

La quantité de NOₓ présente dans les gaz d'échappement peut être déterminée à l'aide d'une cartographie préétablie du fonctionnement du moteur, ou mieux à l'aide d'un ou plusieurs capteurs situés entre le moteur et le filtre à particules.

De préférence, la quantité de NO présente dans les gaz d'échappement en sortie du catalyseur d'oxydation est inférieure ou égale à 100 ppm lorsque l'atome est injecté pour régénérer le filtre à particules.

Pour optimiser le procédé, on peut insérer un dispositif destiné à piéger les NOₓ entre le moteur et le filtre à particules. Pour diminuer la quantité de NOₓ présente dans les gaz d'échappement, on peut également faire recirculer les gaz d'échappement en prélevant une partie des gaz d'échappement en sortie du moteur pour les réinjecter à l'admission dans les cylindres du moteur. Cette méthode, dite EGR (Exhaust Gas Recirculation, recirculation des gaz d'échappement en anglais), présente toutefois l'inconvénient de produire plus de suies.

Afin de traiter les produits issus de l'oxydation des suies par l'ozone, on peut réaliser une imprégnation catalytique sur les canaux du filtre à particules. En effet, les produits majoritaires d'oxydation des particules de suies sont CO et CO₂ avec un rapport CO/CO₂ de l'ordre de 0,4. À titre d'exemple, pour un moteur de véhicule particulier dont les émissions satisfont la norme européenne EURO 3 (0,05 g de suie émise par kilomètre), le dégagement de CO dû au traitement des suies par l'ozone est de 0,048g/km. Ces émissions sont faibles au regard de la limite tolérée (0,64g de CO par km pour un moteur diesel), mais il peut être utile de les traiter.

L'utilisation d'un catalyseur à base de platine en aval du filtre à particules permet également de détruire l'ozone résiduel n'ayant pas réagi avec les particules de suies. L'ozone résiduel peut également être éliminé par un catalyseur spécifique à base par exemple d'oxydes de cuivre et/ou de manganèse.

On peut également envisager d'ajuster la quantité d'ozone injectée en fonction de la masse de suies accumulées dans le filtre à particules. Le contrôle de la masse de suies peut être réalisé à l'aide d'un capteur de pression qui mesure la différence de pression en amont et en aval du filtre à particules. Dans ce cas, l'injection d'ozone est réalisée lorsque les deux conditions suivantes sont réunies:a) la température des gaz d'échappements est inférieure ou égale à 250°C, et b) la masse de suies présentes dans le filtre à particules est supérieure à une valeur prédéterminée. La valeur prédéterminée de masse de suies pourra être fixée préalablement selon la nature du filtre et les paramètres du moteur; elle est de préférence comprise entre 0 et 5 g.

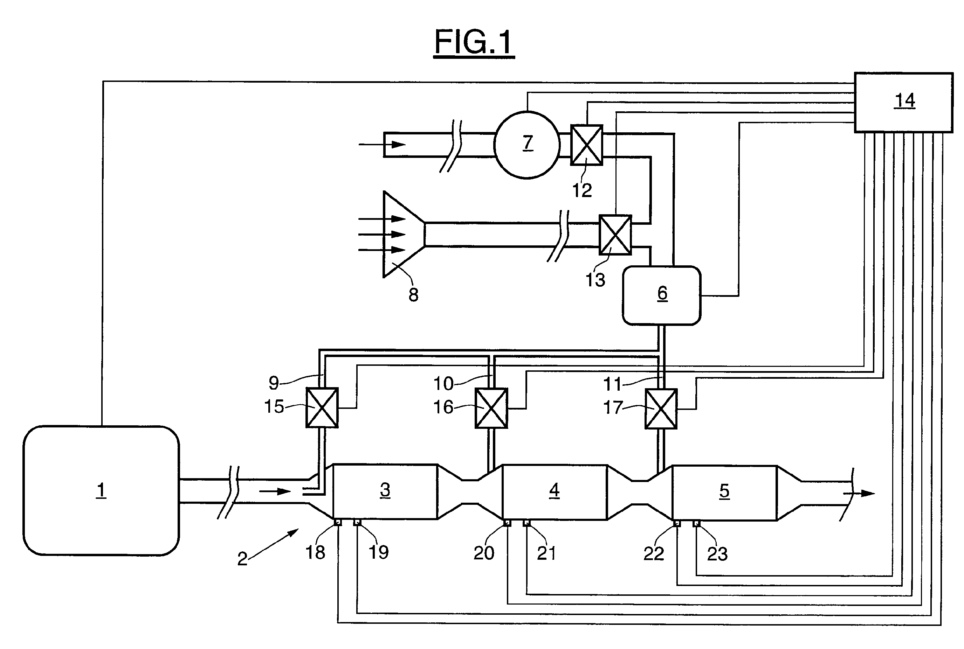

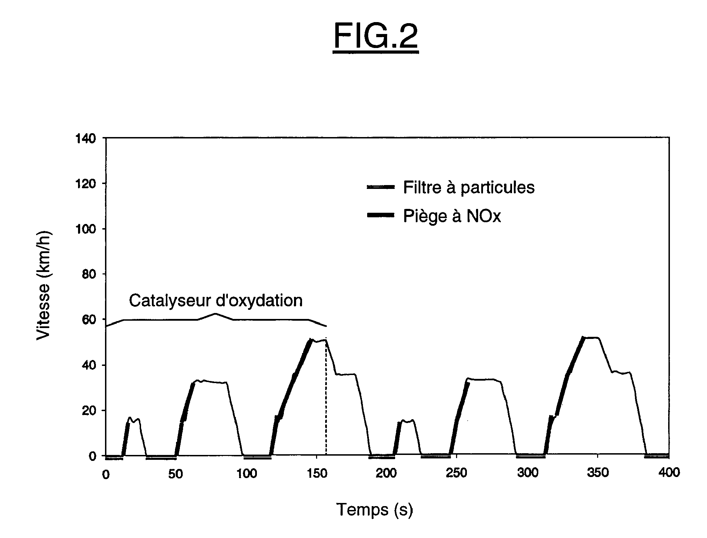

D'autres avantages et caractéristiques de l'invention apparaîtront à l'examen de la description détaillée d'un mode de mise en oeuvre nullement limitatif du procédé de l'invention, et illustré par les figures annexées, parmi lesquelles la figure 1 est une vue schématique d'un dispositif de traitement de gaz d'échappement par injection d'ozone et la figure 2 est une courbe montrant les étapes de fonctionnement.

La figure montre un moteur 1 en sortie duquel se trouve une ligne d'échappement 2 sur laquelle sont positionnés un catalyseur d'oxydation 3, un piège à NOₓ 4 et un filtre à particules 5. Un dispositif d'injection d'ozone 6 alimenté en air par une pompe à air 7 et par un dispositif de prise d'air 8 destiné à capter l'air extérieur au véhicule, est relié à la ligne d'échappement 2 par un conduit 9 qui débouche dans la ligne d'échappement 2 entre le moteur 1 et le catalyseur d'oxydation 3, un conduit 10 qui débouche dans la ligne d'échappement 2 entre le catalyseur d'oxydation 3 et le piège à NOₓ 4, et un conduit 11 qui débouche dans la ligne d'échappement 2 entre le piège à NOₓ 4 et le filtre à particules 5. Le débit d'air est contrôlé par des vannes 12 et 13. La vanne 12 est située entre la pompe à air 7 et le dispositif d'injection d'ozone 6, tandis que la vanne 13 est située entre le dispositif de prise d'air 8 et le dispositif d'injection d'ozone 6. Un dispositif de pilotage 14 est relié au moteur 1, au dispositif d'injection d'ozone 6, à la pompe à air 7, ainsi qu'aux vannes 12 et 13. Les conduits 9, 10, 11 se rejoignent en un tronçon commun relié à la sortie du générateur d'ozone 6. Des vannes 15 à 17 sont disposées sur les conduits 9 à 11 et assurent la répartition de l'ozone entre le catalyseur d'oxydation 3, le piège à NOₓ 4 et le filtre à particules 5, en étant commandées par le dispositif de pilotage 14.

Dans la suite de la description, toutes les opérations d'injection d'ozone, de fourniture ou de coupure d'air, d'injection de carburant, sont commandées par le dispositif de pilotage 14.

Le catalyseur d'oxydation 3, le piège à NOₓ 4 et le filtre à particules 5 sont disposés d'amont en aval dans le sens de déplacement des gaz d'échappement provenant du moteur 1. Sur la conduite entre le moteur 1 et le catalyseur d'oxydation 3, sont disposés un capteur de monoxyde d'azote 18 et un capteur de température 19. En variante, les capteurs 18 et 19 peuvent être disposés à l'entrée du catalyseur d'oxydation 3. Le piège à NOₓ 4 est équipé d'un capteur de monoxyde d'azote 20 et d'un capteur de température 21. La température et la teneur en NOₓ des gaz d'échappements en entrée du filtre à particules sont déterminées à l'aide de capteurs 22 et 23 respectivement.

On rappellera ici que l'ozone est une molécule devenant instable avec l'élévation de la température et généralement détruite à une température supérieure à environ 250°. Par ailleurs, l'ozone est consommé par des réactions chimiques avec les oxydes d'azote NO et NO₂. La réaction prépondérante de l'ozone est l'oxydation du monoxyde d'azote: NO + O₃ → NO₂ + O₂. Il est donc souhaitable que l'ozone soit injecté dans des conditions favorables de composition de gaz d'échappement et de température, en particulier lors de phases précises de fonctionnement du véhicule. La mesure de la concentration en oxyde d'azote et de la température des gaz d'échappement à proximité des points d'injection de l'ozone en entrée du catalyseur d'oxydation 3, du piège à NOₓ 4 et du filtre à particules 5, permet une bonne efficacité de l'injection d'ozone.

Dans le mode de réalisation illustré sur la figure 1, la concentration d'oxyde d'azote est mesurée par des capteurs. Alternativement, la concentration d'oxyde d'azote peut être prédéterminée par la connaissance des conditions de fonctionnement du moteur. Le débit d'ozone est calculé à partir du débit d'air en entrée du générateur d'ozone 6 et de la puissance électrique consommée par ledit générateur d'ozone 6 pour la fabrication de l'ozone.

Le catalyseur d'oxydation 3 a une température dite « d'amorçage thermique » au-delà de laquelle l'oxydation des hydrocarbures imbrûlés et du CO peut s'effectuer sans injection d'ozone, de l'ordre de 150°. En d'autres termes, le dispositif de pilotage 14 commande la fermeture de la vanne 15 lorsque le capteur de température 19 envoie audit dispositif de pilotage 14 une information de température supérieure à 150°. L'injection d'ozone permet au catalyseur d'oxydation 3 de fonctionner convenablement aux faibles températures. La température du catalyseur d'oxydation 3 est mesurée par le capteur de température 19. Alternativement, le capteur de température 19 peut être positionné directement dans le catalyseur 3 ou encore en aval du catalyseur 3. En d'autres termes, le capteur de température 21 du piège à NOₓ 4 peut également servir à estimer la température du catalyseur d'oxydation 3. On peut donc prévoir une variante dépourvue du capteur de température 19.

L'injection d'ozone en entrée du catalyseur d'oxydation 3, est avantageusement effectuée dès le démarrage du véhicule et pendant la durée nécessaire à l'activation thermique du catalyseur. Cette durée est de l'ordre de quelques centaines de secondes. À l'issue de cette durée, le catalyseur d'oxydation 3 voit sa température franchir le seuil de 150°. Si le catalyseur 3 se désamorce, c'est-à-dire que sa température devient inférieure à 150° au cours du fonctionnement du véhicule, condition pouvant être rencontrée par exemple dans des embouteillages, l'injection d'ozone en amont du catalyseur 3 est activée à nouveau par le dispositif de pilotage 14 qui commande l'ouverture de la vanne 15. L'ozone réagissant avec les oxydes d'azote, principalement avec le monoxyde d'azote, la quantité d'ozone à injecter en amont du catalyseur d'oxydation 3 doit être telle que la concentration d'ozone soit supérieure à celle de monoxyde d'azote. La quantité minimale d'ozone à produire est donc fixée par un critère de concentration dans la ligne d'échappement et plus précisément par le rapport des concentrations O₃/NO. À titre d'exemple, on peut choisir un rapport O₃/NO = 1,5.

Le fonctionnement du piège à NOₓ 4 est le suivant. Lors des phases de fonctionnement du moteur 1, qui s'avèrent fortement émettrices en oxyde d'azote, en particulier lors de l'accélération du véhicule, l'efficacité du piégeage des oxydes d'azote est en partie limitée par la difficulté du piège à NOₓ 4 à oxyder le monoxyde d'azote en NO₂ par catalyse. La conduite 10 permet donc d'injecter de l'ozone en amont du piège à NOₓ 4 pour permettre une conversion partielle ou totale du NO en NO₂ et donc de favoriser l'adsorption des NOₓ.

Lorsque la température des gaz d'échappement dépasse un seuil de l'ordre de 300°, l'oxydation du NO en NO₂ ne se fait plus par l'action de l'ozone mais par le catalyseur des parois du piège à NOₓ 4. L'injection d'ozone est donc particulièrement utile pour des températures inférieures au seuil précité. La quantité d'ozone à injecter est telle que la concentration d'ozone dans l'échappement doit être supérieure ou égale à celle de monoxyde d'azote, soit un rapport des concentrations O₃/NO au moins égal à 1. Les oxydes d'azote étant émis principalement pendant les phases d'accélération du véhicule, la vanne 16 sera donc ouverte préférentiellement lors de telles phases. Les capteurs de monoxyde d'azote 20 et de température 21 permettent de surveiller les conditions nécessaires à l'injection d'ozone dans le piège à NOₓ 4. La liaison entre le moteur 1 et le dispositif de pilotage 14 permet également de déterminer les phases d'accélération. La vanne 16 est donc commandée en position ouverte par le dispositif de pilotage 14 lorsque la température détectée par le capteur 21 est inférieure au seuil de température, permettant au catalyseur des parois du piège à NOₓ 4 d'agir, si le rapport de concentration O₃/NO est inférieur à 1. Un tel cas peut se produire si le véhicule se trouve dans une phase d'accélération.

Bien entendu, les essais de température sont donnés ici à titre d'exemples, dans la mesure où des progrès peuvent être effectués sur les catalyseurs, leur permettant un fonctionnement satisfaisant à des températures plus basses.

La mise en place du piège à NOₓ 4 en amont du filtre à particules 5 est particulièrement avantageuse, car elle permet d'éliminer les oxydes d'azote de l'échappement et donc de supprimer la perte d'ozone dans le filtre à particules 5 par la réaction d'oxydation du monoxyde d'azote. Les phases d'injection d'ozone pour régénérer le filtre à particules 5 peuvent être contrôlées sur la base de la température des gaz d'échappement. L'injection d'ozone dans le filtre à particules 5 est donc commandée en cas de faible concentration de monoxyde d'azote détectée par le capteur 22 et en cas de température inférieure au seuil de température, par exemple 250°.

Lorsque la température des gaz d'échappement est inférieure à 250°C et que la quantité de NO est inférieure à une quantité donnée, par exemple comprise entre 50 et 100 ppm, de l'ozone est injecté, grâce au dispositif d'injection d'ozone 4, dans la ligne d'échappement 2 en amont du filtre à particules 5.

Sur la figure 2, sont illustrées plusieurs phases de fonctionnement. Lors du démarrage, de l'ozone est injecté dans le catalyseur d'oxydation 3 pendant environ 155 secondes. De l'ozone est injecté dans le filtre à particules 5 lorsque la vitesse du véhicule est nulle, le moteur étant alors au ralenti. De l'ozone est fourni au piège à NOₓ 4 lors d'accélérations du véhicule qui se traduisent par une forte émission de NOₓ.

Pour produire de l'ozone, le dispositif d'injection d'ozone 6 est alimenté en air par la pompe à air 7 ou le manche à air 8. La pompe à air 7 est utilisée lorsque le véhicule est à l'arrêt, tandis que le dispositif de prise d'air 8 est employé lorsque le véhicule est en mouvement, afin de capter l'air extérieur grâce à la vitesse du véhicule. Le dispositif de prise d'air 8 permet ainsi d'éviter de faire fonctionner la pompe à air 7 lorsque le véhicule est en roulement. Ainsi, à l'arrêt, les vannes 12 et 13 sont respectivement ouverte et fermée, et l'alimentation en air est fournie par la pompe à air 7. Lorsque le véhicule roule, les vannes 12 et 13 sont respectivement fermée et ouverte, l'alimentation en air étant assurée par le dispositif de prise d'air 8.

L'ozone peut être produit soit par une décharge micro-onde, soit par une décharge électrique par application d'une haute tension entre deux électrodes, ou bien encore par exposition du flux d'air à des radiations au moyen de lampes qui émettent dans l'ultraviolet. Le débit d'ozone est contrôlé par le débit d'air dans le dispositif d'injection d'ozone 6 et par la puissance électrique consommée par le dispositif d'injection d'ozone 6.

Le conduit 9 via lequel est réalisée l'injection d'ozone dans la ligne d'échappement 2 peut être positionné à tout endroit de la ligne d'échappement 2, entre le moteur 1 et le catalyseur d'oxydation 3. Il est préférable que le conduit 9 débouche dans l'axe, au centre de la ligne d'échappement 2. De même, pour une meilleure diffusion de l'ozone, le conduit 7 peut être coudé à son extrémité et orienté à contre-courant des gaz issus du moteur 1. De cette façon, la distribution d'ozone est plus homogène, d'où un meilleur fonctionnement. On préfère également injecter l'ozone au plus près du catalyseur d'oxydation 3, idéalement à une distance inférieure ou égale à 5 cm, afin de limiter les pertes d'ozone par des réactions chimiques et par des effets thermiques. On peut également imaginer que le conduit 9 se divise en plusieurs tubes, éventuellement percés de trous, pour améliorer encore la diffusion d'ozone, et le mettre ainsi en contact avec un nombre élevé de particules de suies.

En variante, l'injection d'ozone peut avoir lieu directement dans le catalyseur d'oxydation 3. Ce mode d'injection permet de mettre en contact plus rapidement l'ozone avec les imbrûlés, la réaction se faisant plus vite et plus complètement, limitant les pertes d'ozone.

La réactivité des suies avec l'ozone est d'autant plus importante que la température du lit de suie est élevée. Pour limiter le refroidissement par le flux d'air, les vannes 8 et 9 sont de préférence fermées lorsque le dispositif d'injection d'ozone ne fonctionne pas.

Le procédé peut également être adapté aux différentes phases de fonctionnement du moteur. Le procédé convient particulièrement au ralenti, c'est-à-dire lorsque le moteur est débrayé, et que sa vitesse de rotation est comprise entre 750 et 850 tours/min. ou en phase de ralentissement. Les conditions de température et de quantité de NOₓ sont alors généralement satisfaites. Il convient également lors de déplacements à faible vitesse, notamment en ville. Lors d'un fonctionnement du moteur en vitesse élevée, la température des gaz d'échappement et la quantité de NOₓ présente dans les gaz d'échappement seront souvent trop élevées pour permettre l'injection d'ozone. Les suies s'accumuleront alors dans le filtre à particules jusqu'au rétablissement des conditions de l'invention.

Si la masse de suies accumulées dans le filtre à particules 3 dépasse un seuil considéré comme critique pour le fonctionnement du moteur, et que les conditions de l'invention ne sont pas vérifiées, on peut procéder à la régénération thermique du filtre à particules 3, c'est-à-dire qu'on élève la température des gaz d'échappement au-delà de 550°C afin de brûler les suies. Cette élévation de température est réalisée par des injections supplémentaires de carburant, permettant d'augmenter la température des gaz d'échappement et d'atteindre la température d'auto-inflammation des particules de suies.

Grâce à l'invention, une production d'ozone a lieu si le besoin s'en fait sentir pour améliorer ou permettre le fonctionnement d'un ou plusieurs organes de traitement des gaz d'échappement, d'où une faible consommation d'énergie et une réduction des émissions polluantes.

## Revendications

1. Procédé d'oxydation pour l'épuration de gaz d'échappement d'un moteur à combustion (1), dans lequel on injecte de l'ozone dans un catalyseur d'oxydation (3) lorsque la température des gaz d'échappement dans le catalyseur d'oxydation (3) est inférieure à un seuil prédéterminé, la quantité d'ozone injectée étant supérieure à la quantité de NOₓ présente dans les gaz d'échappement en entrée du catalyseur d'oxydation (3).

2. Procédé selon la revendication 1, dans lequel le seuil prédéterminé est compris entre 100 et 200°C, préférablement entre 140 et 160°C.

3. Procédé selon la revendication 1 ou 2, dans lequel le rapport entre la quantité d'ozone injectée et la quantité de NO présente dans les gaz d'échappement est compris entre 1 et 2, préférablement entre 1,3 et 1,7.

4. Procédé selon l'une quelconque des revendications précédentes, dans lequel l'ozone est injecté à contre-courant des gaz d'échappement.

5. Procédé selon l'une quelconque des revendications précédentes, dans lequel l'injection d'ozone dans les gaz d'échappement est effectuée en amont du catalyseur d'oxydation.

6. Procédé selon l'une quelconque des revendications 1 à 4, dans lequel l'injection d'ozone dans les gaz d'échappement est effectuée dans le catalyseur d'oxydation.

7. Procédé selon l'une quelconque des revendications 1 à 6, dans lequel on injecte de l'ozone dans un piège à NOₓ lorsque la température des gaz d'échappement dans le piège à NOₓ est inférieure à un autre seuil prédéterminé, la quantité d'ozone injectée étant supérieure à la quantité de NO présente dans les gaz d'échappement en entrée du piège à NOₓ.

8. Procédé selon la revendication 7, dans lequel l'injection d'ozone a lieu lorsque la charge du moteur est supérieure à un seuil prédéterminé.

9. Procédé selon la revendication 7 ou 8, dans lequel l'autre seuil prédéterminé est compris entre 200 et 400°C, préférablement entre 250 et 350°C.

10. Procédé selon l'une quelconque des revendications précédentes, dans lequel on injecte de l'ozone dans un filtre à particules lorsque la température des gaz d'échappement est inférieure ou égale à 250°C, la quantité d'ozone injectée étant supérieure à la quantité de NOₓ présente dans les gaz d'échappement en entrée du filtre à particules.

11. Procédé selon l'une quelconque des revendications précédentes, dans lequel on injecte de l'ozone dans un catalyseur d'oxydation lors du démarrage du véhicule, dans un filtre à particules lors d'une phase de ralenti du moteur, et dans un piège à NOₓ lors d'une phase de forte charge du moteur.

12. Système d'aide au fonctionnement d'un catalyseur d'oxydation (3) pour l'épuration de gaz d'échappement d'un moteur à combustion de véhicule automobile comprenant une ligne d'échappement (2) en sortie du moteur (1) sur laquelle est positionné le catalyseur d'oxydation (3), **caractérisé en ce que** le système comprend un générateur d'ozone (6) relié à la ligne d'échappement par un conduit (9), et alimenté en oxygène par une pompe à air (7) et un dispositif de prise d'air (8) destiné à capter l'air extérieur au véhicule, la pompe à air (7) et le dispositif de prise d'air (8) étant munis chacun d'une vanne (12, 13), le système comprenant un dispositif de pilotage (14) relié au moteur (1), au dispositif d'injection d'ozone (6), à la pompe à air (7) et aux vannes (12, 13) de la pompe à air (7) et du dispositif de prise d'air (8).

13. Dispositif selon la revendication 12, **caractérisé en ce que** le conduit (9) est coudé et orienté à contre-courant des gaz issus du moteur (1).

14. Dispositif selon l'une quelconque des revendications 12 ou 13, **caractérisé en ce qu'**il comprend un filtre à particules (5) relié à un conduit (11) d'alimentation en ozone.

15. Dispositif selon la revendication 14, **caractérisé en ce qu'**il comprend un seul générateur d'ozone et des vannes pilotées (15, 17) de répartition de l'ozone produit par le générateur d'ozone entre au moins le catalyseur d'oxydation et le filtre à particules.

16. Dispositif selon la revendication 15, **caractérisé en ce qu'**il comprend un piège à NOₓ (4) relié à un conduit (10) d'alimentation en ozone.

17. Dispositif selon la revendication 14 ou 15, **caractérisé en ce qu'**il comprend un générateur d'ozone pour alimenter le catalyseur d'oxydation et un générateur d'ozone pour alimenter le filtre à particules.

18. Dispositif selon la revendication 17, **caractérisé en ce qu'**il comprend un générateur d'ozone supplémentaire pour alimenter le piège à NOx.
